# EUROPÄISCHE PATENTSCHRIFT

(11) **EP 2 039 276 B1**
(45) Veröffentlichungstag und Bekanntmachung des Hinweises auf die Patenterteilung: **06.01.2010**
(21) Anmeldenummer: 08015581.5
(22) Anmeldetag: 04.09.2008
(51) Int. Cl.: A47L 9/24, F16L 3/015, H01R 13/56

(54) **Knickschutz für eine Leitung**
Kink protector for a line
Protection anti-pliage pour une conduite

(30) Priorität: 21.09.2007 DE 202007013313 U
(43) Veröffentlichungstag der Anmeldung: 25.03.2009
(73) Patentinhaber: TRUPLAST KUNSTSTOFFTECHNIK GMBH, D-35428 Langgöns (DE)
(72) Erfinder: Linhart, Georg, Peter, 61206 Wöllstadt (DE); Linhart, Christian, Norbert, 35428 Langgöns (DE)
(74) Vertreter: Oppermann, Ewald

(56) Entgegenhaltungen:
- DE-A1- 3 101 558

## Beschreibung

### TECHNISCHES GEBIET

Die Erfindung bezieht sich auf einen Knickschutz für eine Leitung, die durch eine Wandöffnung in einer Anschlußmuffe eines Schlauchs oder eines Rohrs, insbesondere eines Staubsaugerschlauchs, hindurch nach außen geführt ist.

Bei dem hier als Leitung bezeichneten Gegenstand handelt es sich um ein elektrische Leiter umschließendes Kabel oder um einen flüssigkeits- oder luftführenden Schlauch.

### STAND DER TECHNIK

Bei einem bekannten Staubsaugerschlauch mit einer Anschlußmuffe (DE 201 14 935 U1) sind elektrische Leiter durch eine Wandöffnung hindurch nach außen geführt. Ein Knickschutz für die elektrischen Leiter ist dabei nicht dargestellt.

Bei einem rechtwinkeligen Abgang einer Leitung aus einer Anschlußmuffe an einem Schlauch/Rohr knickt die ohne Knickschutz nach außen umgebogene Leitung ab. Dabei können im Fall elektrischer Leiter Kabel brechen bzw. flüssigkeits- oder luftführende Schläuche so in ihrem Querschnitt verengt werden, daß der Durchfluß reduziert und im Extremfall vollständig unterbrochen wird.

Knick- oder Biegeschutzanordnungen, im wesentlichen bestehend aus einem Befestigungsteil und einer daran angeschlossenen biegeelastischen Stützwendel, durch welche die Leitung geführt ist, sind in verschiedenen Ausführungsformen für unterschiedliche Anwendungen vorgeschlagen worden (DE 25 15 640 A1, DE 31 01 558 A1, DE 34 12 116 A1, DE 90 01 547 U1). In allen diesen Fällen erfolgt die Befestigung der Knick- oder Biegeschutzanordnungen am Anbringungsort durch miteinander zu verschraubende Gewindeelemente. Dadurch ist die Herstellung und die Montage der bekannten Knick- oder Biegeschutzanordnungen aufwendig, was besonders bei solchen Massenteilen unerwünscht ist.

### AUFGABENSTELLUNG

Der Erfindung liegt die Aufgabe zugrunde, einen Knickschutz für eine Leitung bei den eingangs angegebenen Anwendungsfällen, insbesondere in Verbindung mit Anschlußmuffen für Staubsaugerschläuche, bereitzustellen, der ohne Gewindeelemente einfach zu fertigen und anzubringen ist, ohne daß dadurch seine Funktion beeinträchtigt wird.

### DARSTELLUNG DER ERFINDUNG

Diese Aufgabe wird durch die im Anspruch 1 angegebenen Merkmale gelöst. Vorteilhafte oder zweckmäßige weitere Ausbildungen gehen aus den Unteransprüchen hervor und werden nachfolgend ebenfalls näher beschrieben.

Erfindungsgemäß ist der Knickschutz für eine Leitung, die durch eine Wandöffnung in einer Anschlußmuffe eines Schlauchs oder eines Rohrs, insbesondere eines Staubsaugerschlauchs, hindurch nach außen geführt ist, gekennzeichnet durch einen die Leitung umschließenden Montagesockel und einer damit einteiligen, die Leitung umgebenden und biegeelastischen Stützwendel, wobei an der Anschlußmuffe ein an die Wandöffnung anschließender Ausgangsstutzen für die Leitung vorgesehen ist, in welchen der Montagesockel unter mindestens axialer Fixierung der Leitung formschlüssig und einrastend einschiebbar ist.

Der erfindungsgemäße Knickschutz wird nach Hindurchführung der Leitung mit seinem Montagesockel einfach in den entsprechend angepaßten zugehörigen Ausgangsstutzen der Anschlußmuffe bis zum Einrasten eingeschoben, wobei die Leitung zugleich innerhalb des Montagesockels mindestens in axialer Richtung fixiert wird. Nach dem Einrastvorgang läßt sich weder die Leitung im Knickschutz axial verschieben, noch kann der Knickschutz mit seinem Montagesockel ohne weiteres aus dem Ausgangsstutzen herausgezogen werden. Der so an der Anschlußmuffe befestigte Knickschutz sorgt dafür, daß die Leitung nicht unmittelbar an der Anschlußmuffe um einen Winkel von 90° abknicken kann, sondern durch Einwirkung der Stützwendel nur bogenförmig aus der Anschlußmuffe herausgeführt wird. Daher werden Kabelbrüche bzw. Querschnittsverengungen eines Schlauches mit Sicherheit verhindert.

In Weiterführung des Erfindungsgedankens ist entsprechend Anspruch 2 der Ausgangsstutzen rohrabschnittsförmig ausgebildet und weist eine äußere ringförmige Endfläche auf, welcher der in den Ausgangsstutzen mit einem Klemmabschnitt eingeschobene Montagesockel mit einer entsprechenden Anschlagfläche anliegt. Die Endfläche des Ausgangsstutzens und die Anschlagfläche des Montagesockels begrenzen bzw. beenden den Einschiebweg, wobei die Anschlagfläche den Ausgangsstutzen nach außen hin abschließt.

Vorteilhaft besteht, wie im Anspruch 3 angegeben ist, der Klemmabschnitt des Montagesockels ausgehend von der Anschlagfläche aus mindestens zwei durch axial verlaufende Schlitze voneinander beabstandeten Teilelementen, von denen mindestens eines beim Einschieben der Leitung elastisch nach außen biegbar und beim Einschieben des Klemmabschnitts in den Ausgangsstutzen elastisch unter Klemmeinwirkung auf die Leitung nach innen biegbar ist. Auf diese einfache Weise werden beim Einschiebvorgang nicht nur der Montagesockel und damit die Knickschutzanordnung insgesamt durch Verrastung an dem Ausgangsstutzen befestigt, sondern zugleich wird die Leitung im Montagesockel durch Klemmung fixiert.

Im Anspruch 4 ist angegeben, wie zweckmäßig eine Verrastung des Montagesockels im Ausgangsstutzen herbeigeführt werden kann, nämlich dadurch, daß mindestens eines der Teilelemente außen eine Rastnase aufweist, welcher eine Rastvertiefung in dem Ausgangsstutzen zugeordnet ist, in welche die Rastnase eintritt, wenn der Montagesockel mit seiner Anschlagfläche der Endfläche des Ausgangsstutzens anliegt.

Wenn dabei zusätzlich zu einer axialen Fixierung der Leitung im Montagesockel zugleich eine Drehsicherung gewünscht wird, kann die Anordnung entsprechend Anspruch 5 zweckmäßig so getroffen werden, daß die Rastvertiefung in dem Ausgangsstutzen als die Rastnase komplementär aufnehmende Wandöffnung des Ausgangsstutzens ausgebildet ist, so daß der Montagesockel in dem Ausgangsstutzen sowohl axial fixiert als auch gegen Drehungen des Montagesockels in dem Ausgangsstutzen gesichert ist.

Wenn aber eine nur axiale Fixierung gewünscht wird, kann entsprechend Anspruch 6 die Rastvertiefung in dem Ausgangsstutzen als die Rastnase aufnehmende Ringnut ausgebildet sein, so daß der Montagesockel in dem Ausgangsstutzen nur axial fixiert, aber nicht gegen Drehungen des Montagesockels in dem Ausgangsstutzen gesichert ist. Hierbei ist die um den Innenumfang des Ausgangsstutzens umlaufende Ringnut von außen nicht sichtbar.

Zusätzlich zu einer Fixierung der Leitung in dem Montagesockel durch Klemmeinwirkung kann in Verfolgung des Erfindungsgedankens entsprechend Anspruch 7 vorgesehen sein, daß der Montagesockel zur Verhinderung einer Drehung der Leitung in dem Montagesockel mit mindestens einem an die Leitung angreifenden spitzen Radialvorsprung und zur axialen Fixierung der Leitung in dem Montagesockel mit einer nach innen vorspringenden Ringrippe versehen ist. Bei dem Einschieben des Montagesockels in den Ausgangsstutzen greifen der mindestens eine spitze Radialvorsprung und die Ringrippe in die Umfangsfläche der Leitung ein und verformen diese dabei partiell nach innen, so daß eine sichere Festlegung der Leitung in dem Montagesockel erzielt wird.

Zur Erleichterung der Einführung des Montagesockels in den Ausgangsstutzen ist es entsprechend Anspruch 8 von Vorteil, wenn der Klemmabschnitt des Montagesockels an seinem freien Ende konisch ausgebildet ist. Dadurch wird nicht nur die Einführung des gegenüber den Innenabmessungen des Ausgangsstutzens ein geringes Übermaß aufweisenden Montagesockels in den Ausgangsstutzen erleichtert, zugleich wird der von dem Montagesockel auf die hindurchgeführte Leitung ausgeübte Klemmdruck erhöht.

Die Anordnung kann dabei so getroffen sein, daß der Ausgangsstutzen eine im wesentlichen zylindrische Innenwandfläche besitzt, deren Durchmesser größer als der Durchmesser der Wandöffnung in der Anschlußmuffe ist, so daß zwischen der Wandöffnung und der Innenwandfläche eine Ringstufe gebildet ist, welcher ein Dichtring aufgelegt ist, der die Leitung umschließt und welcher durch die Endfläche des in den Ausgangsstutzen vollständig eingeschobenen und darin verrasteten Montagesockels mit Anpreßdruck beaufschlagt ist.

### KURZE BESCHREIBUNG DER ZEICHNUNGEN

Weitere Einzelheiten der Erfindung werden nachfolgend anhand der ein bevorzugtes Ausführungsbeispiel darstellenden Zeichnungen näher erläutert. Darin zeigt:
- Fig. 1: eine perspektivische Außenansicht einer Anschluß- muffe mit montiertem Knickschutz, jedoch noch ohne Leitung,
- Fig. 2: eine der Fig. 1 ähnliche perspektivische Ansicht der Anschlußmuffe mit montiertem Knickschutz und davon umschlossener, abgebrochen und nicht abge- bogen dargestellter Leitung, mit im Längsschnitt dargestellter Anschlußmuffe,
- Fig. 3: eine Längsschnittansicht der Anschlußmuffe mit mon- tiertem Knickschutz, jedoch noch ohne Leitung,
- Fig. 4: eine abgebrochen und vergrößert dargestellte Schnitteinzelheit entsprechend dem Ausschnittskreis IV in Fig. 3,
- Fig. 5: eine der Fig. 3 ähnliche Längsschnittansicht der Anschlußmuffe mit montiertem Knickschutz und davon umschlossener abgebrochen und nicht abgebogen dar- gestellter Leitung,
- Fig. 6: eine abgebrochen und vergrößert dargestellte Schnitteinzelheit entsprechend dem Ausschnittskreis VI in Fig. 5,
- Fig. 7: eine Seitenansicht des unmontierten Knickschutzes ohne Leitung,
- Fig. 8: die Ansicht des Knickschutzes entsprechend Fig. 7 in axialer Blickrichtung auf den Montagesockel,
- Fig. 9: den Längsschnitt durch den Knickschutz gemäß der Fig. 7 und 8 entsprechend der Schnittverlaufslinie IX-IX in Fig. 8,
- Fig. 10: eine vergrößert dargestellte Schnitteinzelheit ent- sprechend dem Ausschnittskreis X in Fig. 9,
- Fig. 11: eine vergrößert dargestellte Schnitteinzelheit ent- sprechend dem Ausschnittskreis XI in Fig. 9 und
- Fig. 12: eine perspektivische Außenansicht des in den Fig. 7 bis 11 dargestellten Knickschutzes ohne Leitung.

### DETAILLIERTE BESCHREIBUNG DES BEVORZUGTEN AUSFÜHRUNGSBEISPIELS

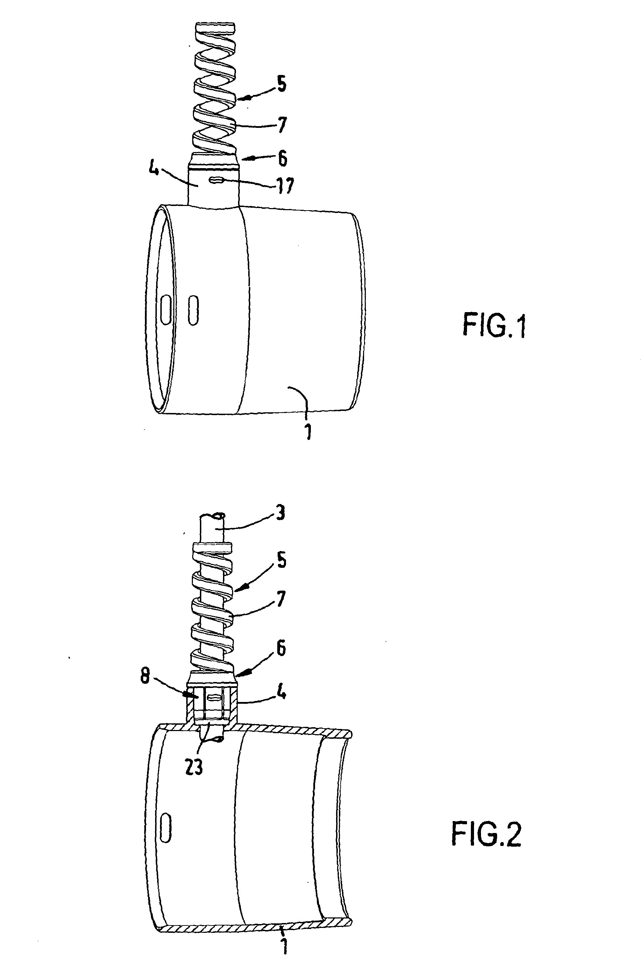

Aus den Fig. 1 bis 6 ist eine für Staubsaugerschläuche typische Anschlußmuffe 1 ersichtlich, in welcher sich eine Wandöffnung 2 befindet, durch welche hindurch eine im Schlauchinneren befindliche Leitung 3 nach außen geführt bzw. zu führen ist. An die Wandöffnung 2 der aus einem thermoplastischen Kunststoff spritzgeformten Anschlußmuffe 1 ist ein angeformter Ausgangsstutzen 4 für die Leitung 3 angeschlossen.

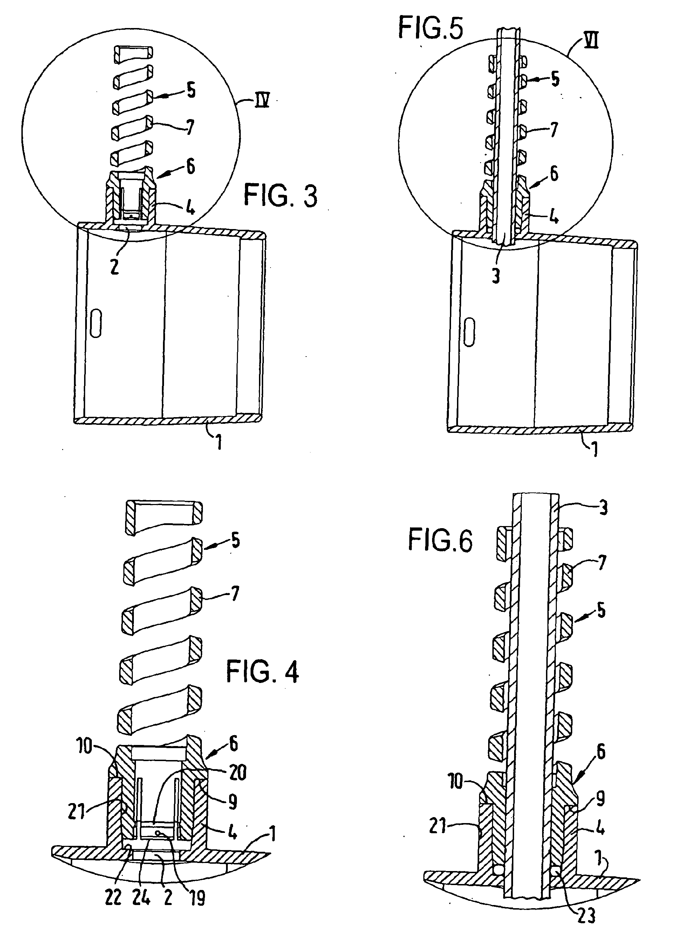

Der an der Anschlußmuffe 1 zu befestigende Knickschutz 5 für die Leitung 3 besteht aus einem Montagesockel 6 und einer damit aus einem thermoplastischen Kunststoff einteilig spritzgeformten elastischen Stützwendel 7. Die Leitung 3 ist durch den Montagesockel 6 und die Stützwendel 7 zu führen, wie beispielsweise aus den Fig. 5 und 6 hervorgeht, wobei zwischen der Innenumfangsfläche der Stützwendel 7 und der Außenumfangsfläche der Leitung 3 ein radialer Abstand als Bewegungsspiel vorgesehen ist, während der Montagesockel 6 mit seiner im wesentlichen zylindrischen Innenumfangsfläche die Außenumfangsfläche der Leitung 3 eng umschließt, wenn der Knickschutz 5, wie beispielsweise in den Fig. 5 und 6 gezeigt ist, an der Anschlußmuffe 1 montiert ist.

Der Montagesockel 6 besitzt einen Klemmabschnitt 8, der zum Einschieben in den Ausgangsstutzen 4 bestimmt ist und bezüglich seiner Ausbildung im Ausführungsbeispiel weiter unten noch näher beschrieben wird. Der Ausgangsstutzen 4 ist rohrabschnittsförmig ausgebildet und besitzt eine äußere ringförmige Endfläche 9. Am Montagesockel 6 ist eine entsprechende Anschlagfläche 10 angeordnet, die bei in den Ausgangsstutzen 4 eingeschobenem Klemmabschnitt 8 der Endfläche 9 flächig anliegt.

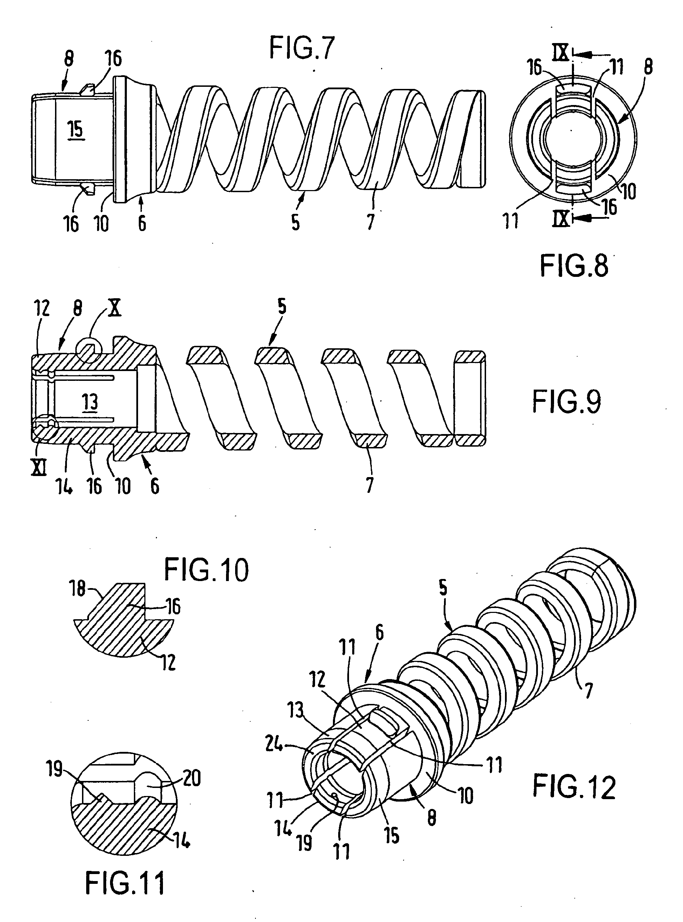

Der Klemmabschnitt 8 ist im Ausführungsbeispiel durch zwei axial verlaufende und zueinander parallele Schlitze 11, wie am besten aus Fig. 8 und 12 entnehmbar ist, in vier voneinander beabstandete Teilelemente 12 bis 15 unterteilt. Die Schlitze 11 gehen bis zur Anschlagfläche 10 durch. Dabei sind die Teilelemente 12 und 14 beim Einschieben der Leitung 3 in den Knickschutz 5 elastisch nach außen biegbar und beim Einschieben des Klemmabschnitts 8 in den Ausgangsstutzen 4 unter Klemmeinwirkung auf die Leitung 3 elastisch nach innen biegbar. Die gewünschte Klemmeinwirkung kann durch zwei Maßnahmen, die einzeln aber auch gemeinsam vorliegen können, herbeigeführt werden. Einerseits kann der Innendurchmesser des Montagesockels 6 etwas kleiner sein als der Außendurchmesser der Leitung 3, und andererseits kann der Innendurchmesser des Ausgangsstutzens 4 etwas kleiner sein als der Außendurchmesser des Klemmabschnitts 8.

Die Teilelemente 12 und 14 weisen außen jeweils eine angeformte Rastnase 16 auf, welcher jeweils eine Rastvertiefung 17 im Ausgangsstutzen 4 zugeordnet ist, von der in Fig. 1 nur eine ersichtlich ist. Die Rastvertiefungen 17 sind im gezeigten Ausführungsbeispiel als die Rastnasen 16 komplementär aufnehmende Wandöffnungen ausgebildet, wodurch der Montagesockel 6 in dem Ausgangsstutzen 4 sowohl axial fixiert als auch gegen Drehungen in dem Ausgangsstutzen 4 gesichert ist. Die Rastnasen 16 sind mit einer Auflaufschrägfläche 18 versehen (Fig. 10), um das Einrasten in die Rastvertiefungen 17 zu erleichtern. In der in den Fig. 1 bis 6 dargestellten verrasteten Position liegt der Montagesockel 6 mit seiner Anschlagfläche 10 der Endfläche 9 des Ausgangsstutzens 4 flächig an.

Die Rastnasen 16 können abweichend von der vorstehend beschriebenen Anordnung auch an die vergleichsweise weniger elastisch biegbaren Teilelemente 13 und 15 angeformt sein, um die beschriebene Verrastung zu erzielen.

Der Montagesockel 6 ist an seiner Innenumfangsfläche mit mindestens einem an die Leitung 3 angreifenden spitzen Radialvorsprung 19 versehen, welcher Drehungen der Leitung in dem Montagesockel 6 bei montiertem Knickschutz verhindert. Im gezeigten Beispiel befinden sich die spitzen Radialvorsprünge 19 an den Teilelementen 12 und 14 des Klemmabschnitts 8 des Montagesockels 6.

Zur axialen Fixierung der Leitung 3 in dem Montagesockel 6 ist dieser mit einer nach innen vorspringenden angeformten Ringrippe 20 versehen, die sich im gezeigten Beispiel den spitzen Radialvorsprüngen 19 benachbart im vorderen, der Anschlagfläche 10 abgelegenen Bereich des Klemmabschnitts 8 befindet und durch die axialen Schlitze 11 an vier Stellen unterbrochen ist. Die Radialvorsprünge 19 und die Ringrippe 20 befinden sich im äußeren Bereich der Teilelemente 12 und 14, d.h. an Stellen, für die der mögliche Federweg dieser Teilelemente am größten ist.

Zur Erleichterung der Einführung des Klemmabschnitts 8 des Montagesockels 6 in den Ausgangsstutzen 4 ist der Klemmabschnitt 8 an seinem freien Ende über alle Teilelemente 12 bis 15 durchgehend konisch ausgebildet, wie insbesondere aus den Fig. 7, 9 und 12 hervorgeht.

Der Ausgangsstutzen 4 besitzt eine im wesentlichen zylindrische Innenwandfläche 21, deren Durchmesser größer ist als der Durchmesser der Wandöffnung 2, wie beispielsweise aus Fig. 4 ersichtlich ist. Außerdem weist die Innenwandfläche 21 eine größere axiale Länge als der Klemmabschnitt 8 des Montagesockels 6 auf. Dadurch wird zwischen der Wandöffnung 2 und der Innenwandfläche 21 eine Ringstufe 22 gebildet, welcher ein Dichtring 23 aufgelegt werden kann, wie aus den Fig. 2, 5 und 6 hervorgeht. Dieser als O-Ring ausgebildete Dichtring 23 umschließt die Leitung 3 und wird durch die Endfläche 24 des in den Ausgangsstutzen vollständig eingeschobenen und darin verrasteten Klemmabschnitts 8 des Montagesockels 6 mit Anpreßdruck beaufschlagt. Die Endfläche 24 ist durch die axialen Schlitze 11 in vier Teilstücke gegliedert, wie beispielsweise aus Fig. 12 hervorgeht.

### BEZUGSZAHLENLISTE

- 1: Anschlußmuffe
- 2: Wandöffnung
- 3: Leitung
- 4: Ausgangsstutzen
- 5: Knickschutz
- 6: Montagesockel
- 7: Stützwendel
- 8: Klemmabschnitt
- 9: Endfläche
- 10: Anschlagfläche
- 11: Schlitze
- 12: Teilelement
- 13: Teilelement
- 14: Teilelement
- 15: Teilelement
- 16: Rastnasen
- 17: Rastvertiefung
- 18: Auflaufschrägfläche
- 19: Radialvorsprünge
- 20: Ringrippe
- 21: Innenwandfläche
- 22: Ringstufe
- 23: Dichtring
- 24: Endfläche

## Patentansprüche

1. Knickschutz für eine Leitung (3), die durch eine Wandöffnung (2) in einer Anschlußmuffe (1) eines Schlauchs oder eines Rohrs, insbesondere eines Staubsaugerschlauchs, hindurch nach außen geführt ist, **gekennzeichnet durch** einen die Leitung (3) umschließenden Montagesockel (6) und einer damit einteiligen, die Leitung (3) umgebenden und biegeelastischen Stützwendel (7), wobei an der Anschlußmuffe (1) ein an die Wandöffnung (2) anschließender Ausgangsstutzen (4) für die Leitung (3) vorgesehen ist, in welchen der Montagesockel (6) unter mindestens axialer Fixierung der Leitung (3) formschlüssig und einrastend einschiebbar ist.

2. Knickschutz nach Anspruch 1, **dadurch gekennzeichnet, daß** der Ausgangsstutzen (4) rohrabschnittsförmig ausgebildet ist, und eine äußere ringförmige Endfläche (9) aufweist, welcher der in den Ausgangsstutzen (4) mit einem Klemmabschnitt (8) eingeschobene Montagesockel (6) mit einer entsprechenden Anschlagfläche (10) anliegt.

3. Knickschutz nach den Ansprüchen 1 und 2, **dadurch gekennzeichnet, daß** der Klemmabschnitt (8) des Montagesockels (6) ausgehend von der Anschlagfläche (10) aus mindestens zwei durch axial verlaufende Schlitze (11) voneinander beabstandeten Teilelementen (12 bis 15) besteht, von denen mindestens eines beim Einschieben der Leitung (3) elastisch nach außen biegbar und beim Einschieben des Klemmabschnitts (8) in den Ausgangsstutzen (4) elastisch unter Klemmeinwirkung auf die Leitung (3) nach innen biegbar ist.

4. Knickschutz nach den Ansprüchen 1 bis 3, **dadurch gekennzeichnet, daß** mindestens eines der Teilelemente (12 bis 15) außen eine Rastnase (16) aufweist, welcher eine Rastvertiefung (17) in dem Ausgangsstutzen (4) zugeordnet ist, in welche die Rastnase (16) eintritt, wenn der Montagesockel (6) mit seiner Anschlagfläche (10) der Endfläche (9) des Ausgangsstutzen (4) anliegt.

5. Knickschutz nach Anspruch 4, **dadurch gekennzeichnet, daß** die Rastvertiefung (17) in dem Ausgangsstutzen (4) als die Rastnase (16) komplementär aufnehmende Wandöffnung des Ausgangsstutzens (4) ausgebildet ist, so daß der Montagesockel (6) in dem Ausgangsstutzen (4) sowohl axial fixiert als auch gegen Drehungen des Montagesockels (6) in dem Ausgangsstutzen (4) gesichert ist.

6. Knickschutz nach Anspruch 4, **dadurch gekennzeichnet, daß** die Rastvertiefung (17) in dem Ausgangsstutzen (4) als die Rastnase (16) aufnehmende Ringnut ausgebildet ist, so daß der Montagesockel (6) in dem Ausgangsstutzen (4) nur axial fixiert ist, aber nicht gegen Drehungen des Montagesockels (6) in dem Ausgangsstutzen (4) gesichert ist.

7. Knickschutz nach den Ansprüchen 1 bis 3, **dadurch gekennzeichnet, daß** der Montagesockel (6) zur Verhinderung einer Drehung der Leitung (3) in dem Montagesockel (6) mit mindestens einem an die Leitung (3) angreifenden spitzen Radialvorsprung (19) und zur axialen Fixierung der Leitung (3) in dem Montagesockel (6) mit einer nach innen vorspringenden Ringrippe (20) versehen ist.

8. Knickschutz nach Anspruch 3, **dadurch gekennzeichnet, daß** der Klemmabschnitt (8) des Montagesockels (6) an seinem freien Ende konisch ausgebildet ist.

9. Knickschutz nach Anspruch 1, **dadurch gekennzeichnet, daß** der Ausgangsstutzen (4) eine im wesentlichen zylindrische Innenwandfläche (21) besitzt, deren Durchmesser größer als der Durchmesser der Wandöffnung (2) in der Anschlußmuffe (1) ist, so daß zwischen der Wandöffnung (2) und der Innenwandfläche (21) eine Ringstufe (22) gebildet ist, welcher ein Dichtring (23) aufgelegt ist, der die Leitung (3) umschließt und welcher durch die Endfläche (24) des in den Ausgangsstutzen (4) vollständig eingeschobenen und darin verrasteten Montagesockels (6) mit Anpreßdruck beaufschlagt ist.

## Claims

1. Kink protector for a line (3) which is led outwardly through a wall opening (2) in a connecting sleeve (1) of a hose or a pipe, particularly a vacuum cleaner hose, **characterised by** a mounting cap (6), which encloses the line (3), and a support helix (7) which is integral with the cap and surrounds the line (3) and which is resilient in bending, wherein provided at the connecting sleeve (1) is an outlet stub (4), which is connected with the wall opening (2) and into which the mounting cap (6) can be pushed with at least axial fixing of the line (3) in mechanically positive and detenting manner for the line (3).

2. Kink protector according to claim 1, **characterised in that** the outlet stub (4) is constructed to have the shape of a section of a tube and has an outer annular end surface (9) which bears by a corresponding abutment surface (10) against the mounting cap (6), which is pushed into the outlet stub (4) by a clamping section (8).

3. Kink protector according to claims 1 and 2, **characterised in that** the clamping section (8) of the mounting cap (6) consists, starting from the abutment surface (10), of at least two part elements (12 to 15), which are spaced apart by axially extending slots (11) and of which at least one is, when the line (3) is pushed in, resiliently bendable outwardly and, when the clamping section (8) is pushed into the outlet stub (4), resiliently bendable inwardly with clamping action against the line (3).

4. Kink protector according to claims 1 to 3, **characterised in that** at least one of the part elements (12 to 15) has on the outside a detent lug (16) associated with a detent depression (17) in the outlet stub (4), into which the detent lug (16) enters when the mounting cap (6) bears by its abutment surface (10) on the end surface (9) of the outlet stub (4).

5. Kink protector according to claim 4, **characterised in that** the detent depression (17) in the outlet stub (4) is formed as a wall opening of the outlet stub (4), which receives the detent lug (16) in complementary manner, so that the mounting cap (6) is not only axially fixed in the outlet stub (4), but also secured against rotations of the mounting cap (6) in the outlet stub (4).

6. Kink protector according to claim 4, **characterised in that** the detent depression (17) in the outlet stub (4) is formed as an annular groove receiving the detent lug (16) so that the mounting cap (6) is only axially fixed in the outlet stub (4) and is not secured against rotations of the mounting cap (6) in the outlet stub (4).

7. Kink protector according to claims 1 to 3, **characterised in that** for preventing rotation of the line (3) in the mounting cap (6), the mounting cap (6) is provided with at least one pointed radial projection (19) engaging the line (3) and, for axially fixing the line (3) in the mounting cap (6), the mounting cap (6) is provided with an inwardly protruding annular rib (20).

8. Kink protector according to claim 3, **characterised in that** the clamping section (8) of the mounting cap (6) is of conical construction at its free end.

9. Kink protector according to claim 1, **characterised in that** the outlet stub (4) has a substantially cylindrical inner wall surface (21), the diameter of which is greater than the diameter of the wall opening (2) in the connecting sleeve (1) so that there is formed between the wall opening (2) and the inner wall surface (21) an annular step (22) on which is placed a sealing ring (23), which surrounds the line (3) and which is loaded with pressing pressure by the end surface (24) of the mounting cap (6) completely pushed into the outlet stub (4) and detented therein.

## Revendications

1. Protecteur anti-pliage pour une conduite ou un conducteur (3), qui est mené vers l'extérieur à travers une ouverture de paroi (2) dans un manchon de raccordement (1) d'un tuyau ou d'un tube, notamment d'un tuyau d'aspirateur, **caractérisé par** un culot de montage (6) entourant la conduite (3), et par une hélice de soutien (7) élastiquement flexible, qui entoure la conduite (3) et est liée d'un seul tenant audit culot de montage, un embout de sortie (4) pour la conduite (3) étant prévu sur le manchon de raccordement (1) en se raccordant à l'ouverture de paroi (2), et le culot de montage (6) peut être inséré dans cet embout de sortie, par complémentarité de formes et en s'y encliquetant tout en réalisant au moins une fixation axiale de la conduite (3).

2. Protecteur anti-pliage selon la revendication 1, **caractérisé en ce que** l'embout de sortie (4) est réalisé sous la forme d'un tronçon de tube et présente une surface terminale extérieure (9) de forme annulaire sur laquelle vient s'appuyer, par une surface de butée (10) correspondante, le culot de montage (6) ayant été inséré avec un tronçon de serrage (8) dans l'embout de sortie (4).

3. Protecteur anti-pliage selon les revendications 1 et 2, **caractérisé en ce que** le tronçon de serrage (8) du culot de montage (6) est constitué, à partir de la surface de butée (10), d'au moins deux éléments partiels (12 à 15), qui sont espacés les uns des autres et séparés par des fentes (11) s'étendant axialement, et dont l'un au moins peut fléchir élastiquement vers l'extérieur lors de l'insertion de la conduite (3), et peut fléchir élastiquement vers l'intérieur lors de l'insertion du tronçon de serrage (8) dans l'embout de sortie (4), en produisant un effet de serrage ou de pincement sur la conduite (3).

4. Protecteur anti-pliage selon les revendications 1 à 3, **caractérisé en ce que** l'un au moins des éléments partiels (12 à 15) présente à l'extérieur, un talon d'encliquetage (16) auquel est associé, dans l'embout de sortie (4), un creux d'encliquetage (17) dans lequel vient s'engager le talon d'encliquetage (16) lorsque le culot de montage (6) s'appuie avec sa surface de butée (10) contre la surface terminale (9) de l'embout de sortie (4).

5. Protecteur anti-pliage selon la revendication 4, **caractérisé en ce que** le creux d'encliquetage (17) dans l'embout de sortie (4) est réalisé en tant qu'ouverture de paroi de l'embout de sortie (4), qui reçoit de manière complémentaire le talon d'encliquetage (16), de sorte que le culot de montage (6) est aussi bien fixé axialement dans l'embout de sortie (4), qu'arrêté à l'encontre de rotations du culot de montage (6) dans l'embout de sortie (4).

6. Protecteur anti-pliage selon la revendication 4, **caractérisé en ce que** le creux d'encliquetage (17) dans l'embout de sortie (4) est réalisé en tant que rainure annulaire ou gorge recevant le talon d'encliquetage (16), de sorte que le culot de montage (6) n'est que fixé axialement dans l'embout de sortie (4), mais n'est pas arrêté à l'encontre de rotations du culot de montage (6) dans l'embout de sortie (4).

7. Protecteur anti-pliage selon les revendications 1 à 3, **caractérisé en ce que** le culot de montage (6) est pourvu d'au moins une protubérance radiale pointue (19) agissant sur la conduite (3), pour empêcher une rotation de la conduite (3) dans le culot de montage (6), et est pourvu d'une nervure annulaire (20) en saillie vers l'intérieur, pour la fixation axiale de la conduite (3) dans culot de montage (6).

8. Protecteur anti-pliage selon la revendication 3, **caractérisé en ce que** le tronçon de serrage (8) du culot de montage (6) est d'une configuration conique à son extrémité libre.

9. Protecteur anti-pliage selon la revendication 1, **caractérisé en ce que** l'embout de sortie (4) possède une surface de paroi intérieure (21) sensiblement cylindrique, dont le diamètre est supérieur au diamètre de l'ouverture de paroi (2) dans le manchon de raccordement (1), de sorte qu'entre l'ouverture de paroi (2) et la surface de paroi intérieure (21) est formé un épaulement annulaire (22) sur lequel est placé un anneau d'étanchéité (23), qui entoure la conduite (3) et est soumis à la pression d'appui de la surface terminale (24) du culot de montage (6) totalement inséré dans l'embout de sortie (4) et encliqueté dans celui-ci.
